Europäisches Patentamt

European Patent Office

Office européen des brevets

(19)

(11) Publication number: **0 172 979**

A2

(12) **EUROPEAN PATENT APPLICATION**

(21) Application number: **84830316.0**

(22) Date of filing: **23.11.84**

(51) Int. Cl.⁴: **B 62 K 19/30,** B 62 K 19/36, B 62 K 21/16

(30) Priority: **28.08.84 IT 2292084 U**

(43) Date of publication of application: **05.03.86 Bulletin 86/10**

(84) Designated Contracting States: **AT BE CH DE FR GB LI NL SE**

(71) Applicant: **TEODORO CARNIELLI & C. S.p.A., Via Dante, 61, I-31029 Vittorio Veneto (Treviso) (IT)**

(72) Inventor: **Carnielli, Teodoro, Via Dante, 61, I-31029 - Vittorio Veneto (Treviso) (IT)**

(74) Representative: **Cicogna, Franco, Ufficio Internazionale Brevetti Dott.Prof. Franco Cicogna Via Visconti di Modrone, 14/A, I-20122 Milano (IT)**

(54) **A quick-release locking device applicable to bycicles in general, for fixing a part mounted on a round metal tube.**

(57) A quick-release locking device for a bicycle, such as a touring bicycle or exercise bicycle, for adjusting the position of a tube (11) mounted on a fixed part of the bicycle, such as the handlebars or saddle pillar, comprises a base (1) to which is fitted a cooperating bracket (5) both of which members have semi-cylindrical portions for receiving the tube (11). The base (1) is fixed permanently to the bicycle frame with respect to which the tube (11) is adjustable. A tie rod (7) passes through aligned holes (3, 6) in the semi-cylindrical base (1) and bracket (5), and is fitted at one end with a lever (10) by a transverse pivot pin (9). The lever (10) has a shaped cam which causes the two semi-cylindrical parts (1, 5) to be drawn together when the lever (10) is turned about the pivot (9) from a first or rest position to a second or clamping position.

- 1 -

A quick-release locking device applicable to bicycles in general, for fixing a part mounted on a round metal tube

The present invention relates to a quick-release locking device applicable to bicycles in general, for fixing a part mounted on a round metal tube.

As is known, touring bicycles or exercise bicycles comprise parts the arrangement of which, with respect to the frame, are suitably adjustable in dependence on the physical structure of the user or of particular requirements thereof.

It is likewise known that such adjustable parts, mainly the handlebar and the saddle, are in general mounted on a round metal tube which is inserted in a corresponding tube of the frame.

The locking of these parts, into such tubes, is effected by means of screw clamps or with functionally equivalent mechanical structures which require the use of tools, which can be inconvenient for the user and which, moreover, can take up a lot of time for the adjustment of the relevant parts.

The present invention seeks to eliminate this disadvantage, by providing a mechanical device which can be fitted to bicycles in general, and which allows the rapid locking and release thereon of parts mounted on round metal tubes. This is advantageously achieved by means of a rapid locking mechanical device for the operation of which no tools are required.

Another object of the present invention is that of providing a mechanical device for rapid locking, which will be structurally simple and of high reliability.

According to the present invention there is provided a quick-release locking device for a bicycle for fixing a part mounted on a round metal tube, characterised by the fact that it comprises a base having a concave semi-cylindrical portion to which is loosely fitted a cooperating part also having in a corresponding position, a concave semi-cylindrical portion, this cooperating part being linked to the base by means of a tie rod to one end of which is pivoted a lever having an eccentric cam by which the said cooperating part is pressed towards the base as the lever is moved from a first to a second position.

One way of putting the invention into practice will now be more particularly described, by way of example, with reference to the accompanying drawings which illustrate a preferred embodiment of the device itself, and in which:

Figure 1 is a cross section through the embodiment in place on a tube; and

Figure 2 is a side view of the embodiment shown in Figure 1.

With particular reference to the drawings, the mechanical quick locking device in question comprises a base portion 1 having a concave semi-cylindrical portion which can be fitted to a fixed part 2 of a touring bicycle, exercise bicyle or the like on which it is required to lock an adjustable part, such as the handlebars, saddle pillar or the like.

This base portion 3 is provided in a median perimetral position with a through hole 3 and on its opposite edge there is fixed, by screws 4, a bracket 5 having, in a corresponding position, a shaped through hole 6 and a concave semi-cylindrical portion. A tie rod 7 passes through the holes 3 and 6 and has a threaded end on which is engaged a ring nut 8, whilst at the opposite end of this tie rod there is pivoted, by means of a pin 9, a lever 10 the pivoted end of which constitutes an eccentric cam of suitable shape.

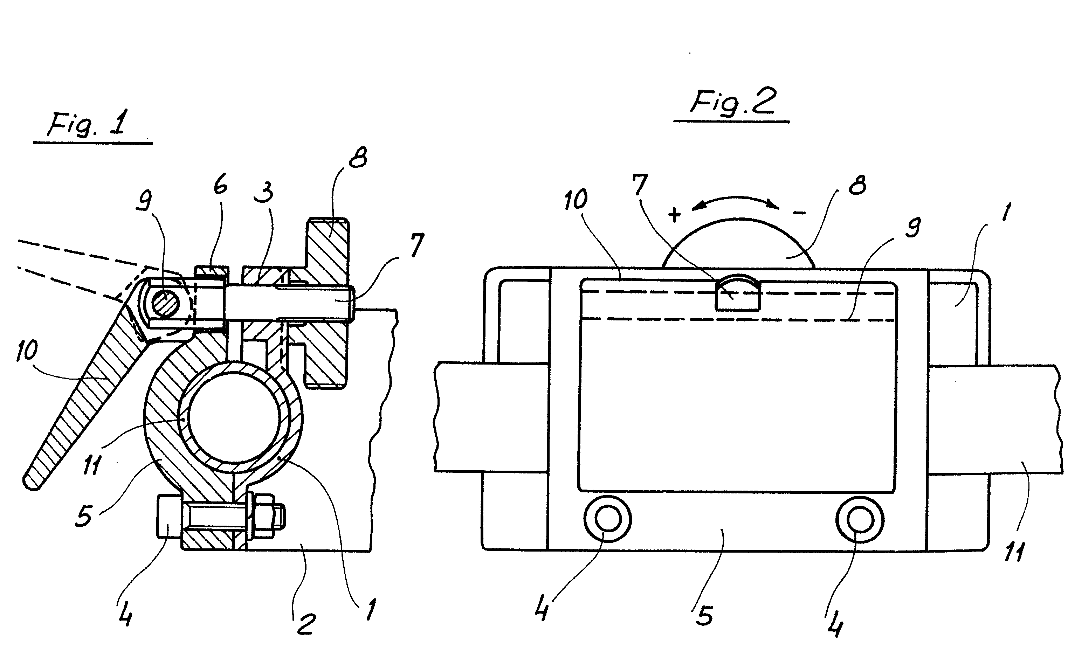

In practice, this lever can assume a release position (indicated in Figure 1 in broken outline) with respect to the tie rod, in such a way as to allow the insertion of the tube 11 to be locked into the cylindrical seat defined by the semi-cylindrical portions of the base 1 and the bracket 5.

When the lever is displaced downwardly (as viewed in Figure 1) it compresses the bracket 5 against the base 1 locking the tube 11 in the selected position.

The locking force can be varied and adjusted according to requirements by turning the ring nut 8 in one direction or the other.

Claims:

1.   A quick-release locking device for a bicycle for fixing a part mounted on a round metal tube (11), characterised by the fact that it comprises a base having a concave semi-cylindrical portion (1) to which is loosely fitted a cooperating part (5) being linked to the base by means of a tie rod (7) to one end of which is pivoted a lever (10) having an eccentric cam by which the said cooperating part (5) is pressed towards the base (1) as the lever (10) is moved from a first to a second position.

2.   A quick release locking device according to Claim 1, characterised by the fact that the said base (1) is fixed securely to a fixed part of the bicycle which may be a touring bicycle, exercise bicycle or the like on which the part (11) (handlebars, saddle pillar or the like) mounted on round metal tube is to be locked; the said base (1) being provided in a median perimetral position with a through hole (3).

3.   A quick-release locking device according to Claim 1 or Claim 2, characterised by the fact that the loosely fitted cooperating part (5) is fixed, by means of bolts or screws (4) to the said base (1), the said cooperating part (5) having in a median perimetral position, a shaped through hole (6) for receiving the tie rod (7).

4. A quick-release locking device according to any of Claims 1 to 3, characterised by the fact that the said tie rod (7) passes through the said through holes (3, 6) in the base (1) and the bracket (5) respectively and the lever (10) is pivotally connected thereto by a pivot pin (9) at a first end thereto whilst the opposite end the tie rod (4) is threaded and receives an adjusting nut (8) by which the clamping force exerted when the said lever is moved to the said second position can be adjusted.

0172979

*Fig. 1*

*Fig. 2*